# EUROPÄISCHE PATENTANMELDUNG

(11) **EP 4 312 300 A1**
(43) Veröffentlichungstag der Anmeldung: **31.01.2024**
(21) Anmeldenummer: 23187699.6
(22) Anmeldetag: 25.07.2023
(51) Int. Cl.: H01M 10/44, H01M 6/52, H01M 10/54

(54) **VERFAHREN UND VORRICHTUNG ZUM TIEFENTLADEN EINER BATTERIE SOWIE BATTERIE**

(30) Priorität: 26.07.2022 DE 102022118755
(71) Anmelder: Liofit GmbH, 01917 Kamenz (DE)
(72) Erfinder: Günther, Rico, 01239 Dresden (DE)
(74) Vertreter: Schied, Sebastian

(57) **Zusammenfassung**

Die Aufgabe der vorliegenden Erfindung besteht darin, ein Verfahren bereitzustellen, das eine schnelle, gefahrlose und zuverlässige Entladung der Batterien ermöglicht. Das Verfahren soll geeignet sein, unterschiedliche Typen und Bauarten von Batterien zu entladen.

Verfahren zum Tiefentladen einer Batterie (1), wobei die Batterie (1) wenigstens eine in einem Batteriegehäuse (2) angeordnete Zelle oder eine Zellanordnung (3) umfasst, aufweisend zumindest die Schritte:
a. Ermitteln von Daten hinsichtlich der jeweiligen Lage (A) des Anodenkontaktbereichs (4) und des Kathodenkontaktbereichs (5) der Zelle oder Zellanordnung (3),
b. Partielles Öffnen (B) des Batteriegehäuses (2) und damit Freilegen der Kontaktbereiche von Anode (4) und Kathode (5) der Zelle oder Zellanordnung (3) anhand der ermittelten Daten,
c. Entladung (C) der Zelle oder Zellanordnung (3) mittels Entladekontakten (6) über die freigelegten Kontaktbereiche der Anode (4) und der Kathode (5) der Zelle oder Zellanordnung (3) mittels der Entladekontakte (6).

## Beschreibung

Die Erfindung betrifft ein Verfahren zum Tiefentladen einer Batterie, zur Durchführung des Verfahrens geeignete oder vorgesehene Vorrichtung und eine besonders für dieses Verfahren geeignete Batterie.

Unter Batterie werden insbesondere auch wiederaufladbare Batterien, die auch als Akkumulatoren bezeichnet werden, verstanden. Die Batterien umfassen ein Batteriegehäuse, in dem zumeist mehrere, miteinander elektrisch verbundene Zellen angeordnet sind. Zumeist ist in dem Batteriegehäuse auch eine Ladesteuerelektronik bzw. eine Schutzelektronik, beispielswiese ein Batteriemanagementsystem angeordnet.

Wiederaufladbare Batterien kommen zunehmend zur Energieversorgung von elektrischen Antrieben, wie insbesondere in Werkzeugen und Fahrzeugen, zum Einsatz.

Wenn die wiederaufladbaren Batterien ihre Kapazität und/oder Leistungsfähigkeit stark eingebüßt haben, werden sie vorzugsweise in ihre Bestandteile zerlegt, um diese zu sortieren und nachfolgend recyceln zu können. Heute werden die wiederaufladbaren Batterien dazu oftmals geschreddert.

Dabei ist es wichtig, dass die wiederaufladbaren Batterien vorher vollständig entladen sind, um Brände und andere Schäden zu vermeiden.

Die vollständige Entladung über die Anschlusskontakte ist zumeist nicht schnell, gefahrlos und zuverlässig möglich. Zumeist müssen die wiederaufladbaren Batterien zunächst von Hand aufwändig oder kostenintensiv automatisiert und teilweise unter Gefahren zerlegt werden, um an die Zellen zu gelangen und diese anschließend entladen zu können. Eine vollständige Entladung über die regulären Batteriekontakte ist nicht möglich, da die integrierte Schutzschaltung oder eine Batteriemanagementschaltung dies zum Schutz der Zellen verhindert bzw. verhindern soll.

Die Aufgabe der vorliegenden Erfindung besteht darin, ein Verfahren bereitzustellen, das eine schnelle, gefahrlose und zuverlässige Entladung der Batterien ermöglicht. Das Verfahren soll geeignet sein, unterschiedliche Typen und Bauarten von Batterien zu entladen.

Weiterhin sollen mit der Erfindung eine zur Durchführung des Verfahrens geeignete Vorrichtung und eine Batterie, die zur erfindungsgemäßen Tiefentladung vorteilhaft ausgebildet ist, bereitgestellt werden.

Die Erfindungsaufgabe wird mit einem Verfahren zum Tiefentladen einer Batterie, aufweisend zumindest eine in einem Batteriegehäuse angeordnete Zelle oder eine Zellanordnung, mit den kennzeichnenden Verfahrensschritten gemäß Anspruch 1 gelöst, wobei bei dem Verfahren zum Tiefentladen einer Batterie, welche wenigstens eine in einem Batteriegehäuse angeordnete Zelle oder eine Zellanordnung umfasst, zumindest folgende Schritte erfolgen:
a. Ermitteln von Daten hinsichtlich der jeweiligen Lage des Anodenkontaktbereichs und des Kathodenkontaktbereichs der Zelle oder Zellanordnung ,
b. Partielles Öffnen des Batteriegehäuses und damit Freilegen der Kontaktbereiche von Anode und Kathode der Zelle oder Zellanordnung anhand der ermittelten Daten,
c. Entladung der Zelle oder Zellanordnung mittels Entladekontakten über die freigelegten Kontaktbereiche der Anode und der Kathode der Zelle oder Zellanordnung mittels der Entladekontakte.

Die Batterie kann mehrere in Reihe und/oder parallel geschaltete Zellen umfassen.

Sind in der Batterie mehrere Zellen zumindest teilweise in Reihe geschaltet, werden diese als Zellenanordnung bezeichnet.

Bei Vorliegen einer Zellenanordnung wird jeweils die Anode und/oder Kathode der ersten und/oder letzten Zelle als Kathodenkontaktbereich und/oder Anodenkontaktbereich der Zellanordnung bezeichnet. Kathode und Anode sind dementsprechend die positiven und/oder negativen Kontaktpole der Zellanordnung.

Zur Vereinfachung sind Zelle und Zellenanordnung synonym zu verstehen.

Erfindungsgemäß ist vorgesehen, dass in einem ersten Verfahrensschritt die jeweilige Lage des Anodenkontaktbereichs und des Kathodenkontaktbereichs der Zelle oder Zellanordnung innerhalb des Batteriegehäuses ermittelt wird.

Unter Lage des Anodenkontaktbereichs und des Kathodenkontaktbereichs der Zelle oder Zellanordnung innerhalb des Batteriegehäuses werden die flächigen und/oder räumlichen Daten, also die Abmessungen der räumlichen Erstreckung bezüglich der Lage der zur Kontaktierung geeigneten und/oder vorgesehenen Bereiche von Anode und/oder Kathode der Batterie verstanden. Die Kontaktbereiche von Anode und/oder Kathode sind auch unter der Bezeichnung Batteriepole bekannt.

Die Ermittlung der Lage des Anodenkontaktbereichs und des Kathodenkontaktbereichs innerhalb des Batteriegehäuses ist Voraussetzung für die nachfolgenden Schritte.

Insbesondere wird die Lage des Anodenkontaktbereichs und des Kathodenkontaktbereichs benötigt, um geeignete oder gut oder leicht zugängliche Positionen des Batteriegehäuses zu ermitteln, an denen Anodenkontaktbereich und Kathodenkontaktbereich durch das Batteriegehäuse hindurch gut kontaktierbar sind.

In einem zweiten Schritt erfolgt ein partielles Öffnen des Batteriegehäuses und damit das Freilegen an den im ersten Schritt ermittelten Stellen oder Positionen zu den Kontaktbereichen von Anode und Kathode anhand der ermittelten Daten oder aus einem vorhandenen Datensatz.

Im letzten Schritt erfolgt die Entladung der Zelle oder Zellanordnung mittels Entladekontakte über die freigelegten Kontaktbereiche der Anode und der Kathode der Zelle oder Zellanordnung mittels der Entladekontakte durch Herstellen einer elektrischen Verbindung zu den beiden Entladekontakten und damit zum Anodenkontaktbereich und Kathodenkontaktbereich der Batterie.

Die Entladekontakte werden an die freigelegten Kontaktbereiche der Anode und der Kathode angeordnet oder herangeführt, so dass ein physischer Kontakt hergestellt und damit ein elektrischer Kontakt zu den Kontaktbereichen von Anode und Kathode ermöglicht wird. Dies kann im örtlichen oder räumlichen Arbeitsbereich des Ermitteln von Daten oder des Partielles Öffnen oder an einem anderen Arbeitsbereich erfolgen.

Die genannten Verfahrensschritte können manuell händisch oder vorzugsweise von automatisierten maschinellen Vorrichtungen ausgeführt werden.

Es ist dabei unerheblich, ob die freizulegenden oder die freigelegten Kontaktbereiche auf jeweils einer Gehäuseseite oder auf benachbarten Gehäuseseite oder auf gegenüberliegenden Gehäuseseiten oder auf anders zueinander ausgerichteten Gehäuseseiten des Batteriegehäuses vorhanden oder angeordnet sind.

Entsprechend erfolgt das Freilegen der Kontaktbereiche an oder auf den jeweils notwendigen oder den jeweiligen Gehäuseseiten des Batteriegehäuses.

Vorteilhafte Ausgestaltungen der Erfindung sind in den Unteransprüchen offenbart.

Gemäß einer vorteilhaften Ausgestaltung der Erfindung erfolgt die die Ermittlung der Daten hinsichtlich der jeweiligen Lage des Anodenkontaktbereichs und des Kathodenkontaktbereichs mittels einer Erfassungseinheit und/oder es wird die Batterie vor Ermittlung der Lage der Kontaktbereiche von einer Aufnahmevorrichtung gegriffen und in einer definierten Position angeordnet.

So kommen beispielsweise physisch abtastentende oder elektromagnetische oder visuelle Erfassungseinheiten oder andere Erfassungseinheiten in Betracht, welche geeignet sind, die notwendigen Daten zu erfassen und im Bedarfsfalle auch zu speichern oder für eine Speicherung zur Verfügung zu stellen oder eine Steuerung zu bedienen oder der Steuerung zur Verfügung zu stellen. Durch das Greifen der Batterie, beispielsweise mittels Greifer aus einem Depot, und nachfolgende definierte Positionierung wird für die anschließende Lageerkennung ein klarer Bezug hergestellt. Die definierte Position erfolgt vorzugsweise bezüglich der Tiefentladevorrichtung, insbesondere der Erfassungseinheit zur Ermittlung der Lage der Kontaktbereiche von Anode und Kathode.

Entsprechend einer vorteilhaften Ausgestaltung der Erfindung ist vorgesehen, dass die jeweilige Lage des Anodenkontaktbereichs und des Kathodenkontaktbereichs der Zelle oder Zellanordnung durch eine Vermessung und/oder Analyse der Verschaltung der Zellen der Batterie ermittelt wird. Dieser Verfahrensschritt ist notwendig, wenn keine entsprechenden Daten zur Batterie vorliegen.

Mit der bekannten Lage des Anodenkontaktbereichs und Kathodenkontaktbereichs kann festgelegt, ermittelt oder erfasst werden, beispielsweise durch eine Auswerte- und Steuereinheit, wo das Batteriegehäuse partiell geöffnet werden kann und/oder soll, um nachfolgend mittels der Entladekontakte elektrische Kontakte zum Anodenkontaktbereich und Kathodenkontaktbereich herzustellen und damit eine Entladung der Zellen zu ermöglichen.

Entsprechend einer vorteilhaften Ausgestaltung der Erfindung erfolgt das Ermitteln der jeweiligen Lage des Anodenkontaktbereichs und des Kathodenkontaktbereichs der Zelle oder Zellanordnung mittels der Erfassungseinheit durch ein bildgebendes Verfahren.

Geeignete, das Batteriegehäuse durchdringende bildgebende Verfahren sind beispielsweise Röntgenaufnahmen oder Ultraschall die vorteilhaft eine schnelle, kontaktlose und nicht invasive Lagebestimmung des Anodenkontaktbereichs und des Kathodenkontaktbereichs ermöglichen.

Auch die Aufnahme und Erkennung der äußeren Form der Batterie und/oder einer Codierung, beispielsweise ein QR-Code ist hier eingeschlossen, so dass mittels Bilderkennung daraus mit Hilfe bekannter Daten die Lage des Anodenkontaktbereichs und des Kathodenkontaktbereichs ermittelt werden kann.

Entsprechend einer vorteilhaften Ausgestaltung des Verfahrens ist weiterhin vorgesehen, dass die ermittelten Daten zur Lage des Anodenkontaktbereichs und des Kathodenkontaktbereichs der Zelle oder Zellanordnung in der Steuereinheit ausgewertet und/oder in einem Datensatz übermittelt und/oder die Daten oder der Datensatz in einem Datenspeicher gespeichert werden.

Die ermittelten Daten oder der Datensatz sind für die Ansteuerung zur partiellen Öffnung des Batteriegehäuses verfügbar, stehen also auch für die spätere Verwendung zur Verfügung und ermöglichen so die erstmalige oder wiederholte Positionierung des entsprechenden Werkzeugs bezüglich des Batteriegehäuses.

Der Datensatz enthält insbesondere die Angaben zur Lage des Anodenkontaktbereichs und Kathodenkontaktbereich und ermöglicht so vorteilhaft die Bestimmung geeigneter Positionen zur partiellen Öffnung des Batteriegehäuses.

Gemäß einer vorteilhaften Weiterbildung wird durch Auslesen aus einem bekannten Datensatz somit die Bestimmung geeigneter Positionen zur partiellen Öffnung des Batteriegehäuses ermöglicht. Der bekannte Datensatz kann in einer Datenbank gespeichert und aus dieser auslesbar sein. Der Datensatz kann auch eine Codierung sein, welche auslesbar ist. Die Codierung kann in oder auf dem Batteriegehäuse vorhanden sein.

Gemäß einer weiteren vorteilhaften Ausgestaltung des Verfahrens ist vorgesehen, dass das partielle Öffnen des Batteriegehäuses und damit das Freilegen der Kontaktbereiche mittels Durchbohren und/oder Fräsen oder Aufschlagen des Batteriegehäuses, beispielsweise an einem Punkt des geringsten Abstandes zum Anodenkontaktbereich und des geringsten Abstandes zum Kathodenkontaktbereich oder an einem Punkt für eine zuverlässige Kontaktierung der Entladekontakte, erfolgt. Dementsprechend kann mittels Durchbohren und/oder Fräsen oder ein Aufschlagen eine geeignete Öffnung in das Batteriegehäuse eingebracht werden, durch die die Entladekontakte an die Kontaktbereiche von Anode und Kathode zur Entladung der Zellen problemlos und sicher angeordnet oder herangeführt werden können.

Gemäß einer vorteilhaften Weiterbildung des Verfahrens wird die der Batterie entnommene Energie über einen Wechselrichter in ein Wechselspannungsnetz eingespeist. Ebenso ist erfindungsgemäß die Möglichkeit vorgesehen, dass die der Batterie entnommene Energie in einer zweiten Batterie, beispielsweise einer Stützbatterie gespeichert wird. Somit kann in der Batterie gespeicherte Elektroenergie auf vorteilhafte Weise weiter genutzt werden.

Vorteilhaft wird im Verfahren nach dem dritten Schritt c in einem vierten Schritt d die Zelle oder Zellanordnung über die freigelegten Kontaktbereiche der Anode und der Kathode Zelle oder Zellanordnung kurzgeschlossen. Somit wird zuverlässig verhindert, dass sich nach dem Tiefentladen in der Zelle oder Zellanordnung durch Regenrationsprozesse oder elektrochemische Prozesse es erneut zu einer Ladung und damit zu einer funkenbildenden Spannung führt.

Das Kurzschließen kann über eine Drahtbrücke zwischen der Anode und der Kathode Zelle oder Zellanordnung mittels Klemmen oder Magneten erfolgen.

Weiterhin wird die Erfindungsaufgabe durch Bereitstellung einer zur Durchführung des Verfahrens vorgesehenen Vorrichtung und eine besonders für dieses Verfahren geeignete Batterie gelöst.

Die Erfindung betrifft dementsprechend eine Vorrichtung zur Vorbereitung des Tiefentladens einer Batterie und in gleicher Weise eine Tiefentladevorrichtung für eine Batterie. Mit der Vorrichtung erfolgt zumindest die Vorbereitung des Tiefentladens der Batterie. Der Schritt des Tiefentladens kann dann außerhalb dieser Vorrichtung oder auch mit dieser Vorrichtung realisiert werden. Wenn im Weiteren von Tiefentladevorrichtung die Rede ist, betrifft das gleichermaßen auch die Vorrichtung zur Vorbereitung des Tiefentladens.

Die erfindungsgemäße Tiefentladevorrichtung für eine Batterie umfasst eine Aufnahmevorrichtung zur Aufnahme einer Batterie, einen Bohrkopf und/oder einen Fräskopf oder ein Schlagkopf, wobei die Aufnahmevorrichtung und der Bohrkopf und/oder Fräskopf oder der Schlagkopf beweglich zueinander angeordnet und durch die Steuereinheit ansteuerbar sind, sowie aufweisend eine Erfassungseinheit zur Ermittlung der Lage des Anodenkontaktbereichs und des Kathodenkontaktbereichs einer Zelle oder Zellenanordnung der in der Aufnahmevorrichtung angeordneten Batterie. Die Erfassungseinheit ist mit der Steuereinheit verbunden, so dass die Daten für die Ansteuerung von Bohrkopf und/oder Fräskopf oder des Schlagkopfes genutzt werden können.

Durch die zueinander bewegliche Anordnung von Aufnahmevorrichtung und Bohrkopf und/oder Fräskopf oder Schlagkopf kann der Bohrkopf und/oder Fräskopf oder Schlagkopf gegenüber der Batterie so positioniert werden, dass eine Öffnung in das Batteriegehäuse so eingebracht werden kann, dass ein Zugang zum Anodenkontaktbereich und Kathodenkontaktbereich und damit eine zweckmäßige elektrische Kontaktierung möglich ist.

Die Erfassungseinheit zur Ermittlung der Lage des Anodenkontaktbereichs und des Kathodenkontaktbereichs, wie beispielsweise eine Röntgenkamera oder Ultraschallkamera, ermöglichen auf vorteilhafte Weise die entsprechende Ermittlung der vorteilhaften Position von Bohrkopf und/oder Fräskopf oder Schlagkopf zur Einbringung der Öffnung in das Batteriegehäuse.

Ebenso kann die Erfassungseinheit ein Datenspeicher mit abgelegten bereits bekannten bzw. erfassten Batterien sein, an anhand der Datensätzen die Lage des Lage des Anodenkontaktbereichs und des Kathodenkontaktbereichs abrufbar oder auslesbar oder erfassbar oder ermittelbar ist und die entsprechende Ermittlung der vorteilhaften Position von Bohrkopf und/oder Fräskopf oder Schlagkopf zur Einbringung der Öffnung in das Batteriegehäuse umsetzbar ist.

Weiterhin sind gemäß einer vorteilhaften Weiterbildung der Erfindung zur Kontaktierung und damit Entladung der Batterie jeweils durch die eingebrachten Gehäuseöffnungen an die Kontaktbereiche von Anode und Kathode heranführbare oder anordbare Entladekontakte vorgesehen.

Die erfindungsgemäße Vorrichtung ist durch die Ermittlung der Lage der Kontaktbereiche der Anode und der Kathode zudem vorteilhaft dazu geeignet, unterschiedliche Ausführungen von Batterien zu entladen und/oder die vorbreitenden Schritte dazu auszuführen.

Dementsprechend ist die erfindungsgemäße Vorrichtung zum Tiefentladen einer Batterie vorteilhaft dazu geeignet, eine schnelle und vollständige Tiefentladung der aus einer oder mehreren Zellen bestehenden Batterie mit einem geringen Aufwand zu realisieren.

Gemäß einer weiteren vorteilhaften Ausgestaltung der erfindungsgemäßen Tiefentladevorrichtung entsprechend sind die Entladekontakte mit Magneten ausgeführt. Durch die Magnete kann die Kontaktierung der Entladekontakte zu den ferromagnetischen oder ferromagnetisierbaren Anodenkontaktbereichen und Kathodenkontaktbereiche durch die magnetische Anziehung deutlich verbessert werden.

Eine erfindungsgemäße Batterie ist dadurch gekennzeichnet, dass an einem Batteriegehäuse der Batterie im Kontaktbereich einer Anode und/oder Kathode der Zelle oder Zellenanordnung zumindest eine Markierung und/oder zumindest eine Sollbruchstelle angeordnet ist. Somit wird das partielle Öffnen vereinfacht und zuverlässiger.

Damit entfällt die ansonsten aufwändige Ermittlung der vorzunehmenden Gehäuseöffnungen zum Zugang zu den Kontaktbereichen von Anode und Kathode, da nur die Lage der äußerlich erkennbaren zumindest einen Markierung und/oder der zumindest einen Sollbruchstelle ermittelt werden muss. Die jeweilige zumindest eine Markierung und/oder Sollbruchstelle ermöglicht somit ein schnelles Auffinden und vereinfachtes Einbringen oder Herstellen der partiellen Öffnungen in das Batteriegehäuse.

Dementsprechend können erfindungsgemäße Batterien nach Ablauf ihrer Nutzungsdauer auf vorteilhafte Weise schneller, störungsfreier, zuverlässiger und damit erheblich einfacher tiefentladen werden.

Gemäß einer vorteilhaften Weiterbildung der erfindungsgemäßen Batterie sind die für die Entladung vorgesehenen Kontaktbereiche von Anode und Kathode vorteilhaft zu der zumindest einen Sollbruchstelle geführt. Damit können die für die Entladung vorgesehenen Kontaktbereiche der Batterien somit zu der zumindest einen, zur Öffnung des Batteriegehäuses geeigneten oder aus anderen Gründen bevorzugten und mit zumindest einer Sollbruchstelle versehenen Position geführt werden.

Die Erfindung wird anhand von Figuren dargestellt und im Folgenden näher beschrieben.

Die Figuren zeigen:
Fig. 1 die Schritte zur Durchführung des Verfahrens zur Entladung einer Batterie und
Fig. 2 eine ein Batteriegehäuse und eine darin angeordnete Zellanordnung umfassende Batterie.

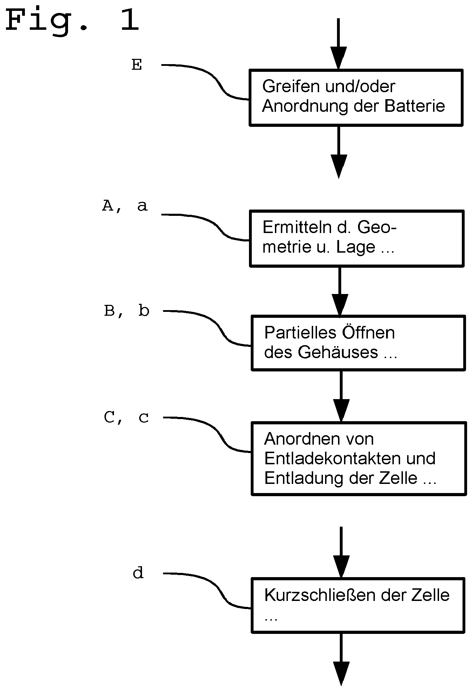

Figur 1 stellt die wesentlichen Schritte zur Durchführung des Verfahrens zur Entladung einer Batterie 1 dar.

Das Verfahren zum Tiefentladen einer Batterie 1, die wenigstens eine in einem Batteriegehäuse 2 angeordnete Zelle oder eine Zellanordnung 3 umfasst, sieht vor, dass je nach Umfang der Automatisierung oder Art der Durchführung des Verfahrens zunächst das Greifen und/oder Anordnung der Batterie in einer definierten Position E erfolgt. Das Verfahren sieht die folgenden Schritte vor, wobei in einem ersten Schritt a das Ermitteln von Daten hinsichtlich der jeweiligen Lage A des Anodenkontaktbereichs 4 und des Kathodenkontaktbereichs 5 der Zelle oder Zellanordnung 3 erfolgt. In dem sich anschließenden zweiten Schritt b erfolgt das partielles Öffnen B des Batteriegehäuses 2 und damit das Freilegen der Kontaktbereiche von Anode 4 und Kathode 5 der Zelle oder Zellanordnung 3 anhand der ermittelten Daten, die dafür unmittelbar erfasst oder aus einem Datensatz bekannter Batterien 1 aus einem Datenspeicher 9 gelesen werden. Weiterhin erfolgt in einem dritten Schritt c die Entladung C der Zelle oder Zellanordnung 3 mittels Entladekontakten 6 über die freigelegten Kontaktbereiche der Anode 4 und der Kathode 5 der Zelle oder Zellanordnung 3 mittels der Entladekontakte 6, die an die freigelegten Kontaktbereiche der Anode 4 und der Kathode 5 angeordnet oder herangeführt C sind.

Vorzugsweise erfolgt nach dem vollständigen Entladen in einem vierten Schritt d über die freigelegten Kontaktbereiche der Anode 4 und der Kathode 5 der Zelle oder Zellanordnung 3 ein Kurzschließen der Anode 4 und der Kathode 5 der Zelle oder Zellanordnung 3. Hierfür wird zwischen der Anode 4 und der Kathode 5 eine Drahtbrücke eingesetzt (nicht dargestellt). Diese kann geklemmt oder mittels Magneten jeweils mit der Anode 4 und der Kathode 5 verbunden sein.

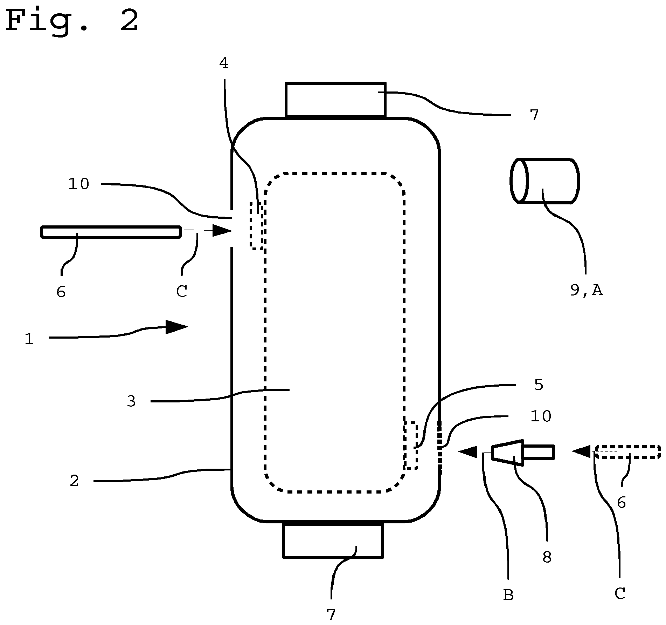

Die Figur 2 zeigt in einer Prinzipdarstellung eine Batterie als eine in einem Batteriegehäuse angeordnete Zellanordnung mit einem Anodenkontaktbereich und einem Kathodenkontaktbereich sowie Teile einer Tiefentladevorrichtung.

Nachfolgend werden Fig. 1 und Fig. 2 zusammenhängend beschrieben.

Die Batterie 1 wird zunächst in den Wirkungsbereich einer Tiefentladevorrichtung zum Tiefentladen einer Batterie 1 beispielsweise mittels Greifen (E) durch Greifer 7 der Aufnahmevorrichtung 7 gebracht und von der Aufnahmevorrichtung 7 der Tiefentladevorrichtung in einer zur Tiefentladevorrichtung definierten Position gehalten E. Die Aufnahmevorrichtung 7 ist hier beispielhaft mit zwei Greifern 7 ausgeführt.

In einem ersten Schritt a erfolgt die Ermittlung der jeweiligen Lage A des Anodenkontaktbereichs 4 und des Kathodenkontaktbereichs 5 der Zelle oder Zellanordnung 3.

Umfasst die Batterie 1 mehrere Zellen, werden diese als Zellenanordnung bezeichnet. Bei Vorliegen einer Zellanordnung 3 wird jeweils die Anode 4 und/oder Kathode 5 der ersten und/oder letzten Zelle als Kathodenkontaktbereich 5 und/oder Anodenkontaktbereich 4 der Zellanordnung 3 bezeichnet. Kathodenkontaktbereich 5 und Anodenkontaktbereich 4 sind dementsprechend die positiven und/oder negativen Kontaktpole der Zellanordnung 3.

Die Ermittlung der jeweiligen Lage des Anodenkontaktbereichs 4 und des Kathodenkontaktbereichs 5 erfolgt durch eine bewegliche Kamera 9. Anstelle der Kamera 9 kann beispielsweise auch ein geeigneter Sensor (nicht dargestellt) zum Einsatz kommen. Alternativ werden die zur Ermittlung der jeweiligen Lage des Anodenkontaktbereichs 4 und des Kathodenkontaktbereichs 5 notwendigen Daten beispielsweise aus einem Datensatz bekannter oder bereits erfasster Batterien 1 übernommen.

In einem nächsten oder zweiten Schritt b erfolgt ein partielles Öffnen B des Batteriegehäuses 2 und somit ein Freilegen der Kontakte der Anode 4 und der Kathode 5 der Zelle oder Zellanordnung 3.

Dazu erfolgt zunächst durch eine Auswerte- und Steuereinheit (nicht dargestellt) die Erfassung oder Ermittlung oder Festlegung der jeweiligen Lage der Kontaktbereiche der Anode 4 und der Kathode 5 die Positionierung des Fräskopfes 8 oder Bohrkopfes 8 oder des Schlagkopfes 8 in der Weise, dass eine Öffnung 10 in das Batteriegehäuse 2 der Batterie 1 eingebracht werden kann, über die ein elektrischer Kontakt zu den Kontaktbereichen von Anode 4 und/oder Kathode 5 herstellbar ist. Dazu ist entweder der Fräskopf 8 oder Bohrkopf 8 oder des Schlagkopf 8 gegenüber dem Batteriegehäuse 2 oder das Batteriegehäuse 2 gegenüber dem Fräskopf 8 oder Bohrkopf 8 oder des Schlagkopf 8 und damit die Aufnahmevorrichtung 7 beweglich ausgebildet.

Es können auch mehrere Bohr- und/oder Fräskopfe 8 oder Schlagköpfe 8 zum Einsatz kommen.

Durch die dann mittels Fräskopf 8 oder Bohrkopf 8 oder Schlagkopf 8 in das Batteriegehäuse 2 eingebrachte Öffnung 10, in Fig. 2 links am Anodenkontaktbereich 4 angeordnet dargestellt, oder die einzubringende Öffnung 10, in Fig. 2 rechts am Kathodenkontaktbereich 5 angeordnet dargestellt, können für den nächsten oder dritten Verfahrensschritt c die Entladekontakte 6 an die Kontaktbereiche von Anode 4 und Kathode 5 angeordnet oder herangeführt C werden.

Durch die zunächst physische Kontaktierung der Entladekontakte 6 mit dem Anodenkontaktbereich 4 und dem Kathodenkontaktbereich 5 kann nachfolgend ein elektrischer Kontakt durch entsprechende Verschaltung mittels der Tiefentladevorrichtung zu den Entladekontakten 6 hergestellt und so die Batterie 1 vollständig entladen C werden.

Weiterhin ist eine erfindungsgemäße Vorrichtung zur Vorbereitung des Tiefentladens einer Batterie 1 oder eine Tiefentladevorrichtung für eine Batterie 1 mit einem Batteriegehäuse vorgesehen, wobei die Vorrichtung oder Tiefentladevorrichtung eine Aufnahmevorrichtung 7 zur Aufnahme 2 der Batterie 1, einen Bohrkopf 8 und/oder einen Fräskopf 8 oder Schlagkopf aufweist. Die Aufnahmevorrichtung 7 und der Bohrkopf 8 und/oder Fräskopf 8 oder Schlagkopf 8 sind beweglich zueinander angeordnet und durch eine Steuereinheit ansteuerbar. Weiterhin weist die Vorrichtung oder Tiefentladevorrichtung eine Erfassungseinheit 9 zur Ermittlung der Lage A der Anodenkontaktbereichs 4 und des Kathodenkontaktbereichs 5 einer Zelle oder Zellenanordnung 3 der in der Aufnahmevorrichtung 8 angeordneten Batterie auf. Die Erfassungseinheit ist mit der Steuereinheit verbunden.

Weiterhin weist die Vorrichtung oder Tiefentladevorrichtung zwei mit einer Entladeschaltung verbundene, an die Kontaktbereiche der Anode 4 und der Kathode 5 heranführbare oder anordbare Entladekontakte 6 auf.

Je nach Leitermaterial der Kontaktbereiche der Anode und Kathode weisen die Entladekontakte 6 Magnete auf.

Die erfindungsgemäße Batterie 1 weist an einem Batteriegehäuse 2 der Batterie 1 im Kontaktbereich einer Anode 4 und/oder Kathode der Zelle oder Zellenanordnung 6 zumindest eine Markierung und/oder zumindest eine Sollbruchstelle auf, wodurch das Freilegen der Kontaktbereiche der Anode 4 und der Kathode 5 vereinfacht wird.

Vorteilhaft können die Kontaktbereiche von Anode 4 und Kathode 5 zu der zumindest einen Sollbruchstelle geführt sein.

### Bezugszeichenliste

| | |
|---|---|
| 1 | - Batterie |
| 2 | - Batteriegehäuse, |
| 3 | - Zellanordnung |
| 4 | - Anodenkontaktbereich, Anode |
| 5 | - Kathodenkontaktbereich, Kathode |
| 6 | - Entladekontakte |
| 7 | - Aufnahmevorrichtung, Greifer |
| 8 | - Fräskopf, Bohrkopf, Schlagkopf |
| 9 | - Erfassungseinheit zur Ermittlung der Lage (des Anodenkontaktbereichs und des Kathodenkontaktbereichs der Zelle oder, Zellanordnung), Kamera, Datenspeicher |
| 10 | - Öffnung im Gehäuse |
| a | - erster Schritt |
| b | - zweiter Schritt |
| c | - dritter Schritt |
| d | - vierter Schritt |
| A | - Ermitteln der jeweiligen Lage (des Anodenkontaktbereichs und des Kathodenkontaktbereichs der Zelle oder Zellanordnung), |
| B | - Partielles Öffnen (des Batteriegehäuses und Freilegen der Kontaktbereiche der Anode und der Kathode der Zelle oder Zellanordnung), |
| C | - Anordnen oder heranführen von Entladekontakten (an die freigelegten Kontaktbereiche der Anode und der Kathode), Entladung (der Zelle oder Zellanordnung über die freigelegten Kontaktbereiche der Anode und der Kathode der Zelle oder Zellanordnung), |
| E | - Greifen und/oder Anordnung der Batterie (in einer definierten Position) |

## Patentansprüche

1. Verfahren zum Tiefentladen einer Batterie (1), wobei die Batterie (1) wenigstens eine in einem Batteriegehäuse (2) angeordnete Zelle oder eine Zellanordnung (3) umfasst, aufweisend zumindest die Schritte:
a. Ermitteln von Daten hinsichtlich der jeweiligen Lage (A) des Anodenkontaktbereichs (4) und des Kathodenkontaktbereichs (5) der Zelle oder Zellanordnung (3),
b. Partielles Öffnen (B) des Batteriegehäuses (2) und damit Freilegen der Kontaktbereiche von Anode (4) und Kathode (5) der Zelle oder Zellanordnung (3) anhand der ermittelten Daten,
c. Entladung (C) der Zelle oder Zellanordnung (3) mittels Entladekontakten (6) über die freigelegten Kontaktbereiche der Anode (4) und der Kathode (5) der Zelle oder Zellanordnung (3) mittels der Entladekontakte (6).

2. Verfahren nach Anspruch 1, **dadurch gekennzeichnet, dass** die Ermittlung der Daten hinsichtlich der jeweiligen Lage (A) des Anodenkontaktbereichs (4) und des Kathodenkontaktbereichs (5) mittels einer Erfassungseinheit (9) erfolgt und/oder dass die Batterie vor Ermittlung der Lage (A) von einer Aufnahmevorrichtung (7) gegriffen und/oder in einer definierten Position angeordnet (E) wird.

3. Verfahren nach Anspruch 1 oder 2, **dadurch gekennzeichnet, dass** das Ermitteln der jeweiligen Lage (A) der Kontaktbereiche von Anode (4) und Kathode (5) der Zelle oder Zellanordnung (3) durch eine Vermessung und/oder Analyse der Verschaltung der Zellen der Batterie (1) erfolgt.

4. Verfahren nach Anspruch 1, 2 oder 3, **dadurch gekennzeichnet, dass** das Ermitteln der jeweiligen Lage (A) der Kontaktbereiche von Anode und Kathode der Zelle oder Zellanordnung durch ein bildgebendes Verfahren erfolgt.

5. Verfahren nach einem der Ansprüche 1 bis 4, **dadurch gekennzeichnet, dass** die ermittelten Daten zur Lage (A) des Anodenkontaktbereichs (4) und des Kathodenkontaktbereichs (5) der Zelle oder Zellanordnung (3) in einer Steuereinheit ausgewertet und/oder in einen Datensatz übermittelt und/oder die Daten oder der Datensatz in einem Datenspeicher (9) gespeichert werden, wobei die Daten oder der Datensatz für das Ansteuern zur partiellen Öffnung des Batteriegehäuses (2) verfügbar sind.

6. Verfahren nach Anspruch 1, **dadurch gekennzeichnet, dass** das Ermitteln der jeweiligen Lage (A) des Anodenkontaktbereichs und des Kathodenkontaktbereichs der Zelle oder Zellanordnung durch ein Auslesen aus einem bekannten Datensatz erfolgt.

7. Verfahren nach einem der Ansprüche 1 bis 6, **dadurch gekennzeichnet, dass** das partielle Öffnen (B) des Batteriegehäuses (2) und/oder das Freilegen der Kontakte (4, 5) durch ein Durchbohren und/oder Fräsen oder ein Aufschlagen des Batteriegehäuses jeweils an einem Punkt des geringsten Abstandes zum Anodenkontaktbereich und des geringsten Abstandes zum Kathodenkontaktbereichs oder an einem Punkt für eine zuverlässige Kontaktierung der Entladekontakte (6) erfolgt.

8. Verfahren nach einem der Ansprüche 1 bis 7, **dadurch gekennzeichnet, dass** die der Batterie (1) entnommene Energie über einen Wechselrichter eingespeist oder in einer zweiten Batterie gespeichert wird.

9. Verfahren nach einem der Ansprüche 1 bis 7, **dadurch gekennzeichnet, dass** nach dem Schritt c. in einem Schritt d. die Zelle oder Zellanordnung (3) über die freigelegten Kontaktbereiche der Anode (4) und der Kathode (5) der Zelle oder Zellanordnung (3) kurzgeschlossen wird.

10. Verfahren nach einem der Ansprüche 1 bis 8, **dadurch gekennzeichnet, dass** das Verfahren ganz oder teilweise in einer automatisierten Vorrichtung erfolgt oder durchgeführt wird.

11. Vorrichtung zur Vorbereitung des Tiefentladens einer Batterie (1) oder eine Tiefentladevorrichtung für eine Batterie (1) mit einem Batteriegehäuse, aufweisend eine Aufnahmevorrichtung (7) zur Aufnahme (2) der Batterie (1), einen Bohrkopf (8) und/oder einen Fräskopf (8) oder Schlagkopf, wobei die Aufnahmevorrichtung (7) und der Bohrkopf (8) und/oder Fräskopf (8) oder Schlagkopf (8) beweglich zueinander angeordnet und durch eine Steuereinheit ansteuerbar sind, sowie aufweisend eine Erfassungseinheit (9) zur Ermittlung der Lage (A) der Anodenkontaktbereichs (4) und des Kathodenkontaktbereichs (5) einer Zelle oder Zellenanordnung (3) der in der Aufnahmevorrichtung (8) angeordneten Batterie, wobei die Erfassungseinheit (9) mit der Steuereinheit verbunden ist.

12. Vorrichtung oder Tiefentladevorrichtung nach Anspruch 11, weiterhin aufweisend zwei mit einer Entladeschaltung verbundene, an die Kontaktbereiche der Anode und Kathode heranführbare oder anordbare Entladekontakte (6).

13. Vorrichtung oder Tiefentladevorrichtung nach Anspruch 12, **dadurch gekennzeichnet, dass** die Entladekontakte (6) Magnete aufweisen.

14. Batterie (1), **dadurch gekennzeichnet, dass** an einem Batteriegehäuse (2) der Batterie (1) im Kontaktbereich einer Anode (4) und/oder Kathode () der Zelle oder Zellenanordnung (6) zumindest eine Markierung und/oder zumindest eine Sollbruchstelle angeordnet ist.

15. Batterie (1) nach Anspruch 14, **dadurch gekennzeichnet, dass** die Kontaktbereiche von Anode (4) und Kathode (5) zu der zumindest einen Sollbruchstelle geführt sind.
